# EUROPÄISCHE PATENTSCHRIFT

(11) **EP 1 141 689 B1**
(45) Veröffentlichungstag und Bekanntmachung des Hinweises auf die Patenterteilung: **27.07.2005**
(21) Anmeldenummer: 99959379.1
(22) Anmeldetag: 04.12.1999
(51) Int. Cl.: G01N 27/14, G01N 27/12, G01N 33/00

(54) **GASANALYSEGERÄT**
GAS ANALYSIS APPARATUS
APPAREIL POUR L'ANALYSE DES GAZ

(30) Priorität: 08.12.1998 DE 19856414
(43) Veröffentlichungstag der Anmeldung: 10.10.2001
(60) Teilanmeldung: 04010437.4
(73) Patentinhaber: Forschungszentrum Karlsruhe GmbH, 76133 Karlsruhe (DE)
(72) Erfinder: KELLER, Hubert, D-76139 Karlsruhe (DE); SEIFERT, Rolf, D-79365 Rheinhausen (DE); JERGER, Armin, D-77815 Bühl (DE); BECKER, Frank, D-76227 Karlsruhe (DE); KOHLER, Heinz, D-77815 Bühl (DE)
(86) Internationale Anmeldenummer: PCT/EP1999/009501
(87) Internationale Veröffentlichungsnummer: WO 2000/034766

(56) Entgegenhaltungen:
- EP-A- 0 571 115
- EP-A- 0 829 718
- US-A- 4 567 475
- US-A- 4 627 269
- US-A- 4 896 143
- US-A- 5 055 270
- KOHLER H ET AL: "New applications of tin oxide gas sensors. I. Molecular identification by cyclic variation of the working temperature and numerical analysis of the signals" SENSORS AND ACTUATORS B (CHEMICAL), 14 DEC. 1999, ELSEVIER, SWITZERLAND, Bd. B61, Nr. 1-3, Seiten 163-169, XP000882346 ISSN: 0925-4005
- HAWK R M ET AL: "INCREASING THE SELECTIVITY OF COMMERCIALLY AVAILABLE TIN OXIDE BASED GAS SENSORS FOR MONITORING COMBUSTIBLE GASES IN PROCESS ENVIRONMENTS" JOURNAL OF VACUUM SCIENCE AND TECHNOLOGY: PART A,US,AMERICAN INSTITUTE OF PHYSICS. NEW YORK, Bd. 13, Nr. 3, PART 01, 1. Mai 1995 (1995-05-01), Seiten 996-1000, XP000531600 ISSN: 0734-2101

## Beschreibung

Die Erfindung betrifft ein Gasanalysegerät zur qualitativen und/oder quantitativen Bestimmung der Konzentration von zumindest einer Gaskomponente mittels eines nach einem zyklisch vorgegebenen Heizprofil beheizten Gassensors, das eine zu detektierende Gaskomponente zuverlässiger und exakter bestimmt.

In einer Reihe von preiswerten Gasanalysegeräten werden Halbleiter-Gassensoren eingesetzt. Als Warnmelder z. B. vor Undichtigkeiten in Gasanlagen, vor Rauchentwicklungen im Brandfall, als Leckagedetektoren zur Überwachung von Kühlanlagen oder als Alarmgeber vor einer Vielzahl von toxischen Gasen z. B. zur MAK-Überwachung (MAK: Maximale Arbeitsplatzkonzentration). Hinsichtlich der Materialbeschaffenheit werden dabei vorzugsweise Halbleiter-Gassensoren vom SnO₂-Typ verwendet, da diese nach dem Stand der Technik eine hohe Empfindlichkeit, einen niedrigen Stückpreis und eine sehr einfache, preiswerte Messtechnik aufweisen.

Um verschiedene Gase selektiv nachweisen bzw. um Gaskomponenten in einem Gemisch analysieren zu können, ist bereits vorgeschlagen worden, mehrere der vorbeschriebenen einzelnen Halbleiter-Gassensorelemente zu einer Einheit, einem sogenannten MultisensorArray zusammenzufassen und entweder jedes dieser Einzeldetektorelemente mit einer selektiv permeablen Membran zu umhüllen oder bei verschiedenen konstanten Temperaturen und/oder mit unterschiedlichen Katalysatorzusätzen zu betreiben. Dadurch ist jedes Einzeldetektorelement für verschiedene Gase unterschiedlich sensitiv. Der Multisensor kann - entsprechend seiner verschiedenen Einzeldetektorelement-Bausteine - ggf. unter Anwendung von numerischen Mustererkennungsmethoden, zum selektiven Nachweis verschiedener Komponenten eines Gases eingesetzt werden.

Die US 4,627,269 offenbart ein Gasanalysegerät zur qualitativen und/oder quantitativen Bestimmung der Konzentration von zumindest einer Gaskomponente mittels eines nach einem zyklisch vorgegebenen Heizprofil beheizten Gassensors. Der Gassensor ist dabei in eine Messkammer eingebaut, die sich nicht in einem Messkopf befindet. Wie der Gassensor untergebracht ist, wird nicht beschrieben. Der Aufbau des Gasanalysegeräts im Falle mehrerer Gassensoren wird ebenfalls nicht erläutert.

Die EP 0 571 115 offenbart einen Feuchtigkeitssensor, der auf einem Sockel in einer nach einer Seite offenen Kammer in ein Gehäuse eingebaut ist. Zum Schutz des Sensors ist auf der offenen Seite der Kammer eine Abdeckung fest angebracht, die einen ringförmigen Schlitz zum Zwecke des Gasaustausches frei lässt. Der Feuchtigkeitssensor wird bei konstanter Temperatur betrieben. Die Abdeckung weist keinen Durchbruch auf. Dass der Messkopf und die Abdeckung gegeneinander verschoben werden, wird nicht beschrieben.

Die US 5,055,270 offenbart ein Gasanalysegerät zur qualitativen und/oder quantitativen Bestimmung der Konzentration von zumindest einer Gaskomponente mittels eines nach einem zyklisch vorgegebenen Heizprofil beheizten Gassensors. Der Sensor ist dabei in eine Kammer eingebaut, die von einem Deckel mit einer kleinen Öffnung zum Zwecke des Gasaustausches abgeschlossen ist. Über eine Vorrichtung, die den Messkopf und die Abdeckung gegeneinander verschieben kann, wird nichts erklärt.

In der EP 0 829 718 A1 wird ein Gasanalysegerät beschrieben, mit dem eine Gaskomponente über einen oder mehrere, spezifisch empfindliche Halbleiter-Gassensor/en angezeigt und in ihrer Konzentration bestimmt wird. Hierzu wird die Arbeitstemperatur des Sensors bzw. der Sensoren zyklisch variiert und dessen bzw. deren Widerstand oder Leitwert über die Zykluszeit in Form von Leitwert-Zeit-Profilen aufgenommen, woraus dann schließlich Prozesssignale abgeleitet werden. Solche Profile sind für die spezifischen Stoffe wie Benzol, Toluol und Ethanol beispielhaft aufgenommen und in den Figuren 2(1) bis 2(5) der Zeichnung dargestellt. Dabei ist zu berücksichtigen, dass die angestrebte Analysequalität nach dem Verfahren in EP 0 829 718 A1 nur erreicht werden kann, wenn die Zusammensetzung des Gasgemisches während der Aufnahme des Leitwert-Zeit-Profils konstant ist, denn nur unter dieser Voraussetzung können gasspezifische Profilformen gewonnen werden, die anschließend zur Identifikation der Gaskomponente herangezogen werden können.

Dies bedeutet, dass die Messgasatmosphäre vor dem Sensorelement nur in einem definierten Zeitintervall zwischen zwei aufeinanderfolgenden Messzyklen ausgetauscht werden kann, um auf diese Art und Weise die aktuelle Zusammensetzung des Messgases im Zeitabstand von ungefähr einem Heizzyklus zu erfassen.

Einerseits soll dabei die Bestimmungszeit reduziert werden, um Regelfreiheit zu bekommen, und andrerseits soll es eine Vielfachmesskammeranordnung sein, um durch unterschiedliche Gassensoren eine verbesserte Selektivität zu erreichen.

Die Auswertung der Sensorsignale erfolgt über ein Klassifikationsverfahren, welches bei unterschiedlichen Zuständen des zu analysierenden Gasgemisches eine qualitative und quantitative Bestimmung der zu detektierenden Gaskomponenten ermöglicht. Es ist im Gegensatz zu dem in der EP 0 829 718 A1 beschriebenen Auswerteverfahren auch ein ausschließendes Klassifikationsverfahren, das feststellt, ob sich andere als die zu detektierenden Gaskomponenten im Messmedium befinden.

Der Erfindung liegt die Aufgabe zugrunde, in der Atmosphäre oder einem sonstigen gasförmigen Medium gasförmige Komponenten zu detektieren und in ihrer Konzentration zuverlässiger und exakter zu bestimmen.

Die Aufgabe wird durch die Ausgestaltung des Mess-/Sensorkopfes des Gasanalysegeräts gemäß den kennzeichnenden Merkmalen des Anspruchs 1 gelöst. Das Gasanalysegerät hat einen Messkopf, in dem sich mindestens eine Kammer mit einem Sockel befindet, in den ein spezifisch gasempfindliches Sensorelement gesteckt ist. Eine Abdeckung mit Durchbruch bedeckt den Messkopf des Gasanalysegeräts. Weiter ist eine Transportvorrichtung vorhanden, die den Messkopf und die Abdeckung derart gegeneinander verschiebt, dass sich der Durchbruch über den Messkopf weiterbewegt und über einer vorbestimmten Kammer eine vorgegebene Zeit verweilt. Dadurch kann die Kammer mit einer zu untersuchenden Atmosphäre geflutet werden. Durch Weiterrücken der Abdeckung bei wieder verschlossener Kammer wirkt diese Atmosphäre auf den Sensor ein.

In den Ansprüchen 2, 3 und 4 wird jeweils ein Bauprinzip gekennzeichnet, wie das Gasanalysegerät gemäß Anspruch 1 technisch aufgebaut sein kann, nämlich: zylindrisch oder gestreckt oder radial.

Im ersteren sind die Kammern mit ihrer jeweiligen Längsachse parallel zur Zylinderachse des Gasanalysegeräts und um den Umfang verteilt oder sogar gleichverteilt angeordnet. Die Öffnungen befinden sich auf einer Stirnseite des zylindrischen Sensormesskopfes (Anspruch 2).

Im zweiten Fall ist das erste Bauprinzip mit seinem Mantel einfach in die Ebene abgerollt. Der Sensormesskopf ist dann bandförmig (Anspruch 3).

Im dritten Fall ist der Sensormesskopf auch zylindrisch. Jedoch liegen die Kammern jetzt in einer Ebene, deren Normale auf der Zylinderachse liegt, von der die Kammerachse/Kammerachsen radial weggeht/weggehen, so dass die Kammeröffnung/en in der Mantelfläche des zylindrischen Sensormesskopfes liegt/liegen (Anspruch 4).

Anspruch 5 beschreibt die gruppenartige Zusammenfassung der Kammern, womit dann mit dem Verfahren zeitsparender eine oder mehrere Gaskomponenten detektiert und in ihrer Konzentration erfasst werden kann oder können.

Als gasempfindliche Sensoren haben sich Halbleiter-Gassensoren bewährt, die insbesondere auch sehr wirtschaftliche Komponenten sind (Anspruch 6). Unter diese Gruppen von Sensoren fallen auch jene Varianten, die mehrere sensitive Schichten auf einem Chip aufweisen, d.h. ein Ein-Chip-Multisensorarray darstellen.

Gemäß Anspruch 7 umgibt den Messkopf samt Abdeckung nach den verschiedenen Bauweisen ein hermetisch verschließendes Gehäuse mit Ein- und Auslass für die zu untersuchende Atmosphäre. Dieses Gehäuse bildet mit dem Messkopf eine Großkammer. Über Ein- und Auslass wird die zu untersuchende Atmosphäre durch diese Großkammer geströmt.

Mit dem Gasanalysegerät steht eine Einrichtung zur Verfügung, die in erster Linie bei der Analyse und Überwachung von Gasgemischen, sei es zur Überwachung der Gefahr von toxischen Schäden oder der Explosionsgefahr oder zur Steuerung und Regelung empfindlicher Verfahrensprozesse, zum Einsatz kommen soll. Dieses Gerät bietet wesentlich erhöhte Zuverlässigkeit und erheblich geringere Neigung zu Fehlalarmen durch harmlose Stoffe im Vergleich zu bestehenden Geräten nach dem Stand der Technik.

Das erste, zylindrische Bauprinzip des Messkopfes mit seiner Kammeröffnung/Kammeröffnungen auf einer Stirnseite wird im folgenden anhand der Zeichnung genauer erläutert.

Es zeigen:
Figur 1 den Schnitt durch den Messkopf des Gasanalysegeräts,
Figur 2a den Drehteller im axialen Schnitt und
Figur 2b die Draufsicht auf den Drehteller.
Figur 3 der zylindrische Sensormesskopf mit radialer Anordnung der Kammern.

Der Messkopf ist im axialen Schnitt dargestellt, der seinen Zusammenbau übersichtlich darstellt. Im Grundkörper befinden sich, um die Achse des Messkopfes verteilt, die Kammern, in die jeweils ein Gassensor ragt. Der Gassensor steckt in einem Sockel und ragt, von der zugehörigen Sensorhalterung in Position gebracht, in die Kammer.

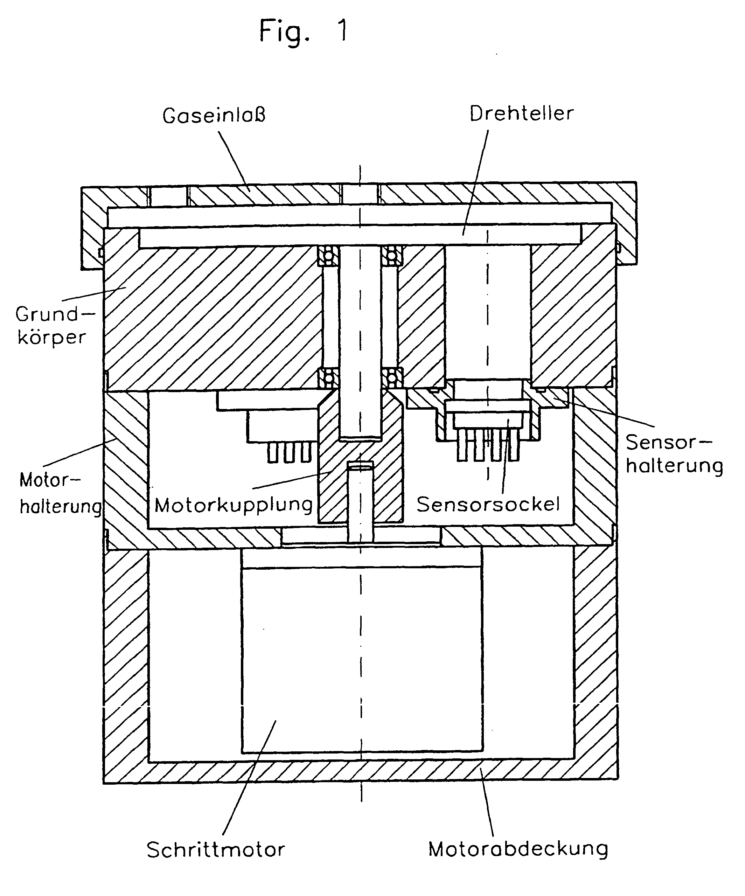

Die Halterung der Drehvorrichtung, die hier in Form eines Schrittmotors realisiert ist, ist an diesen Grundkörper angeflanscht und trägt den Schrittmotor, der selber wieder durch eine Abdeckung gekapselt ist. Die Achse des Schrittmotors ist über die Motorkupplung mit dem Stiel des Drehtellers verbunden, der durch den Grundkörper ragt und in diesem an der jeweiligen Stirnseite mit zwei Kugellagern gelagert ist (Figur 1).

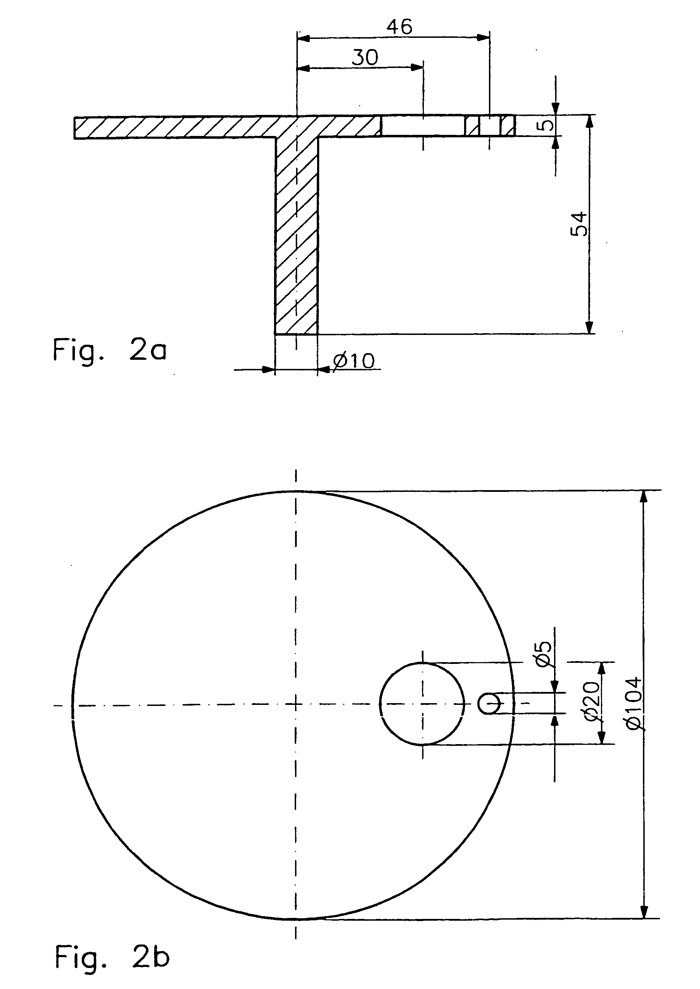

Über den Schrittmotor angetrieben, lässt sich die große Öffnung (20 mm Durchmesser) im Drehteller (Figur 2a und b) über die Kammeröffnung drehen, so dass in diese das gasförmige Medium mit seinen verschiedenen Komponenten einströmen kann. Ist die Kammer hinreichend geflutet, dreht der Schrittmotor um einen vorgegeben Winkel die Lochscheibe weiter und die Kammer bleibt zur messtechnischen Aufnahme des Leitwert-Zeit-Profils geschlossen.

Für spezielle Anwendungen kann es nützlich sein, den Drehteller durch einen Deckel abzudecken, der mit dem Drehteller eine Vorkammer bildet, in dem sich zur Einleitung und Abführung des zu untersuchenden Gasmediums die zentrale und radial versetzte Bohrung befinden.

Der Messkopf ist über Signal-, Steuer- und Stromleitungen an die Betriebs- und Auswerteeinrichtung des Gasanalysegeräts angeschlossen (nicht eingezeichnet). Die Messwerte werden dort rechnergestützt ausgewertet und dargestellt bzw. werden Steuersignale davon zum Betrieb der Prozessumgebung abgeleitet.

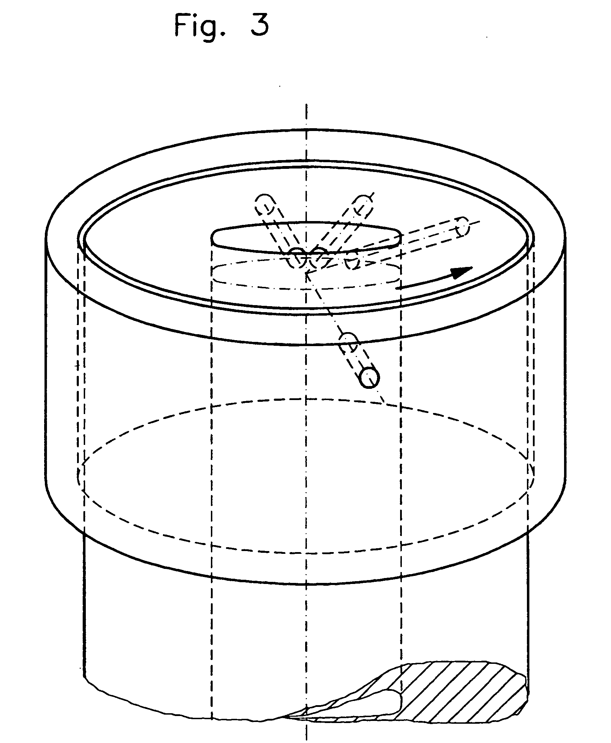

In Figur 3 ist der ebenfalls zylindrische Aufbau des Sensormesskopfes skizziert. Die Achsen der Kammern liegen alle in einer Ebene und gehen von der Achse des zylindrischen Sensormesskopfes aus. Die Öffnungen der Kammern liegen auf der Mantelfläche des Zylinders. Der Deckel für die Kammern ist das anliegende zylindrische Band, in dem sich das Belüftungsloch befindet. Das Band läuft über die Kammeröffnungen um und verweilt mit seinem Belüftungsloch zur Belüftung über der ausgewählten Kammer des zur Detektion der gesuchten Gaskomponente gerade benötigten Sensors. Vom Prinzip her ist es egal, ob sich der Sensormesskopf dreht und das Band stillsteht oder umgekehrt. Bei der technischen Realisierung wird die robuste und wirtschaftliche Lösung bevorzugt werden. Es sei denn, andere Randwerte erzwingen eine der beiden Möglichkeiten.

Über ein Klassifikationsverfahren wird dann entschieden, ob sich eine der zu detektierenden Gaskomponenten im Messmedium befindet oder nicht und ggf. die Gaskonzentration bestimmt. Es ist in diesem Sinne auch ein ausschließendes Klassifikationsverfahren, das feststellt, ob sich andere als die zu detektierenden Gaskomponenten im Messmedium befinden. Das *Ver*fahren ist ferner in der Lage, diese Klassifikation und Konzentrationsbestimmung auch bei unterschiedlichen Zuständen des Messmediums, wie z. B. verschiedenen relativen bzw. absoluten Luftfeuchtigkeiten, Luftdrucken, Lufttemperaturen, durchzuführen.

## Patentansprüche

1. Gasanalysegerät zur qualitativen und/oder quantitativen Bestimmung der Konzentration von zumindest einer Gaskomponente mittels eines nach einem zyklisch vorgegebenen Heizprofil beheizten Gassensors,
**dadurch gekennzeichnet, dass**
sich in einem Messkopf des Gasanalysegeräts mindestens eine Kammer mit einem Sockel befindet, in den ein spezifisch gasempfindliches Sensorelement gesteckt ist,
eine Abdeckung mit Durchbruch den Messkopf des Gasanalysegeräts bedeckt und eine Transportvorrichtung vorhanden ist, die den Messkopf und die Abdeckung derart gegeneinander verschiebt,
dass sich der Durchbruch über den Messkopf weiterbewegt und über einer vorbestimmten Kammer eine vorgegebene Zeit verweilt, damit die Kammer mit einer zu untersuchenden Atmosphäre geflutet werden kann, um danach durch Weiterrücken der Abdeckung bei wieder verschlossener Kammer eine vorgegebene Zeit auf den Sensor einzuwirken.

2. Gasanalysegerät nach Anspruch 1, **dadurch gekennzeichnet, dass** der Messkopf des Gasanalysegeräts zylindrisch aufgebaut ist und sich die mindestens eine Kammer in einem vorgegeben radialen Abstand zur Achse des Messkopfes befindet,
die Abdeckung kreisscheibenförmig ist, ihre Achse mit der des Messkopfes zusammenfällt, der Durchbruch darin denselben radialen Abstand von der Achse hat wie die Kammer,
die Transportvorrichtung ein Schrittmotor ist, um die Scheibe mit ihrem Durchbruch über die Achse schrittweise weiter zu bewegen.

3. Gasanalysegerät nach Anspruch 1, **dadurch gekennzeichnet, dass**
der Messkopf des Gasanalysegeräts linear aufgebaut ist und sich bei mehr als einer Kammer dieselben entlang der Längsachse aneinander reihen,
die Abdeckung mit ihrem einen Durchbruch bandförmig ist und die Transporteinrichtung seitlich des Messkopfes angebracht ist, mit der das Band schrittweise über den Messkopf bewegt wird.

4. Gasanalysegerät nach Anspruch 1, **dadurch gekennzeichnet, dass** der Messkopf des Gasanalysegeräts radial aufgebaut ist und sich in vorgegebenem radialen Abstand von der Achse des Messkopfes die mindestens eine Kammer befindet,
die Abdeckung ein am äußeren Umfang des Messkopfes vorhandenes Band ist,
wobei mit der Transportvorrichtung das Band und der Messkopf gegeneinander verdreht werden.

5. Gasanalysegerät nach den Ansprüchen 1 bis 4, **dadurch gekennzeichnet, dass** eine Anzahl Kammern im Messkopf zu mindestens einer Gruppe zusammengefasst sind,
jede Gruppe aus mindestens einer Kammer besteht und
die in den Kammern steckenden Sensoren einer Gruppe gleich, d.h. spezifisch gleich empfindlich sind.

6. Gasanalysegerät nach Anspruch 5, **dadurch gekennzeichnet, dass** die Gassensoren Halbleiter-Gassensoren sind.

7. Gasanalysegerät nach einem der Ansprüche 1 bis 6, **dadurch gekennzeichnet, dass** ein hermetisch verschließendes Gehäuse mit Ein- und Auslass für die zu untersuchende Atmosphäre den Messkopf samt Abdeckung unter Bildung einer Großkammer umgibt.

## Claims

1. Gas analysis instrument for the qualitative and/or quantitative determination of the concentration of at least one gas component by means of a gas sensor heated according to a given cyclic heating profile,
**characterized by**
the measurement head of the gas analysis instrument accommodating at least one chamber with a base, into which a specifically gas-sensitive sensor element is inserted,
the measurement head of the gas analysis instrument being covered by a cover with an aperture and a transport unit being provided, by means of which the measurement head and the cover are shifted relative to each other such that the aperture moves over the measurement head and remains above a predetermined chamber for a given period, as a result of which the chamber can be flooded with an atmosphere to be analyzed, and with the cover then moving further such that the chamber is dosed again and the atmosphere inside can act on the sensor.

2. Gas analysis instrument according to Claim 1, **characterized by** the measurement head of the gas analysis instrument being designed cylindrically and the one chamber at least being located at a given radial distance from the axis of the measurement head,
the cover having the shape of a circular disk, its axis coinciding with that of the measurement head, and the aperture in the cover having the same radial distance from the axis than the chamber,
the transport unit being a stepping motor that serves to move the disk with its aperture above the axis in a stepwise manner.

3. Gas analysis instrument according to Claim 1, **characterized by** the measurement head of the gas analysis instrument being designed linearly and, in case of a larger number of chambers, these chambers being arranged along the longitudinal axis,
the cover with its aperture having the shape of a band and the transport unit, by means of which this band is moved above the measurement head in a stepwise manner, being fixed on the side of the measurement head.

4. Gas analysis instrument according to Claim 1, **characterized by** the measurement head of the gas analysis instrument being designed radially and the one chamber at least being located at the given radial distance from the axis of the measurement head,
the cover being a band that is located at the outer circumference of the measurement head,
with the band and the measurement head being twisted opposite to each other by the transport unit.

5. Gas analysis instrument according to Claims 1 through 4, **characterized by** a number of chambers in the measurement head forming at least one group,
each group consisting of a chamber at least, and
the sensors inserted into the chambers of a group being identical, i.e. having the same specific sensitivity.

6. Gas analysis instrument according to Claim 5, **characterized by** the gas sensors being semiconductor gas sensors.

7. Gas analysis instrument according to one of Claims 1 through 6, **characterized by** a hermetically tight housing with an inlet and outlet for the atmosphere to be analyzed enclosing the measurement head and cover, thus forming a large chamber.

## Revendications

1. Analyseur de gaz pour la détermination qualitative et/ou quantitative de la concentration d'au moins un composant de gaz à l'aide d'un détecteur de gaz chauffé conformément à un profil de chauffage prédéfini cycliquement,
**caractérisé en ce que**:
dans une tête de mesure de l'analyseur de gaz, il se trouve au moins une chambre avec un socle dans lequel un élément détecteur spécifiquement sensible aux gaz est inséré,
qu'un chapeau équipé d'une ouverture couvre la tête de mesure de l'analyseur de gaz et qu'il existe un dispositif de transport qui déplace la tête de mesure par rapport au chapeau de telle façon que l'ouverture continue à se déplacer sur la tête de mesure et qu'il s'arrête pendant un délai donné sur une chambre prédéfinie, pour que la chambre puisse être remplie d'une atmosphère à analyser pour agir ensuite sur le détecteur pendant un délai donné, la chambre étant refermée.

2. Analyseur de gaz selon la revendication 1, **caractérisé en ce que** la tête de mesure de l'analyseur de gaz possède une structure cylindrique et qu'au moins l'une des chambres se trouve à une distance radiale donnée par rapport à l'axe de la tête de mesure,
le chapeau a la forme d'un disque circulaire, que son axe coïncide avec celui de la tête de mesure, que l'ouverture dans celui-ci présente la même distance radiale par rapport à l'axe que la chambre,
le dispositif de transport est un moteur pas à pas servant à déplacer pas à pas sur l'axe le disque avec son ouverture.

3. Analyseur de gaz selon la revendication 1, **caractérisé en ce que** la tête de mesure de l'analyseur de gaz possède une structure linéaire et qu'en présence de plus d'une chambre, celles-ci se succèdent le long de l'axe longitudinal,
le chapeau avec son ouverture présente la forme d'une bande et que le dispositif de transport est disposé du côté de la tête de mesure et sert à faire déplacer pas à pas la bande à travers la tête de mesure.

4. Analyseur de gaz selon la revendication 1, **caractérisé en ce que** la tête de mesure de l'analyseur de gaz a une structure radiale et qu'au moins l'une des chambres se trouve à la distance radiale donnée par rapport de la tête de mesure,
le chapeau est une bande disposée sur le pourtour de la tête de mesure,
la bande et la tête de mesure étant tournée l'une par rapport à l'autre à l'aide du dispositif de transport.

5. Analyseur de gaz selon les revendications 1 à 4, **caractérisé en ce qu'**un certain nombre de chambres sont regroupées dans la tête de mesure en au moins un groupe,
chaque groupe se compose d'au moins une chambre et
que les détecteurs d'un groupe introduits dans les chambres sont identiques, c'est à dire ont une sensibilité spécifique identique.

6. Analyseur de gaz selon la revendication 5, **caractérisé en ce que** les détecteurs de gaz sont des détecteurs de gaz à semi-conducteurs.

7. Analyseur de gaz selon l'une quelconque des revendications 1 à 6, **caractérisé en ce qu'**un boîtier fermé hermétiquement, muni d'une admission et d'une sortie de l'atmosphère à analyser, entoure la tête de mesure y compris le chapeau en formant une grande chambre.
